# EUROPEAN PATENT APPLICATION

(11) **EP 1 601 189 A2**
(43) Date of publication of application: **30.11.2005**
(21) Application number: 05011274.7
(22) Date of filing: 24.05.2005
(51) Int. Cl.: H04N 5/232

(54) **Autofocus system**

(30) Priority: 26.05.2004 JP 2004155938; 18.08.2004 JP 2004238198
(71) Applicant: Fujinon Corporation, Saitama-shi, Saitama (JP)
(72) Inventor: Sasaki, Tadashi, Saitama-shi Saitama (JP); Yata, Kunio, Saitama-shi Saitama (JP)
(74) Representative: Grünecker, Kinkeldey, Stockmair & Schwanhäusser Anwaltssozietät

(57) **Abstract**

The autofocus system of the present invention is characterized by comprising a target subject specifying device (26) which specifies a target subject to be put into focus, a tracking image pickup device (23) which captures a subject image in the shooting range of the camera, and is provided in addition to an image pickup device of the camera which captures a subject image to be recorded or regenerated, a target subject movement detection device (26) which detects a movement in the shooting range of the target subject specified by the target subject specifying device (26) according to an image signal of a subject image captured by the tracking image pickup device (23), and an AF area change device (16) which changes a range of the AF area such that the movement of the target subject detected by the target subject movement detection device (26) is tracked.

## Description

### BACKGROUND OF THE INVENTION

### 1. Field of the Invention

The present invention relates to an autofocus system, and more specifically to an autofocus system for automatically tracking a target subject in an AF area at a target range of autofocus (AF) in a shooting range of a camera.

### 2. Related Art

With an image pickup system which converts an image of a subject to an electric signal (image signal) by an image pickup element (CCD, etc.) like a TV camera, a contrast system is generally used as an autofocus (AF) system. The contrast system is to detect the contrast of a subject image from an image signal fetched by an image pickup element, and control the focus of the taking lens such that the highest contrast can be obtained, thereby automatically obtaining focus in the best status.

In the AF in the contrast system, the entire subject in the shooting range of a camera is not the target of the AF, but only a certain part of a subject in a part of range of the shooting range is processed as a target in many cases. In the AF in the contrast system, the image signals in the target range of the AF are extracted from among the image signals fetched from the entire image pickup area of the image pickup element, and the target of the AF is limited only to the subject in a part of the range by controlling the focus such that the contrast of the extracted image signal in the range can be the highest. In the present specifications, the range of the subject of the AF target in the shooting range of the camera, or the range of the subject on the screen of the AF target of the screen of the shot image when the shot image of the camera is regenerated is referred to as an AF area, and the frame indicating the frame of the outline of the AF area is referred to as an AF frame.

When a single AF area is fixed and set in a predetermined position in the shooting range, a rectangular AF area is normally set at the center of the shooting range, but an operator can specify a change in the position of the AF area. In the present specifications, the point for determination of the position (for example, the central point of the rectangular AF area and the position of any point of the four corners) in the shooting range (or the screen of a shot image) of the AF area is called an AF point. When the AF point is specified using an operation device in a TV camera, etc., the operation device such as a track ball, a joy stick, etc. capable of indicating the vertical and horizontal movements of the AF point is used (for example, refer to Japanese Patent Application Laid-open No. 2002-365519).

### SUMMARY OF THE INVENTION

However, when an AF target subject to be put into focus is an object which moves on the screen although the AF point can be changed, it is necessary to move an AF point to the movement of the target subject by operating an operation device such as a track ball, a joy stick, etc. Therefore, the operation requires a complicated and careful job. Especially, when a target subject moves quickly on the screen, there is the problem that it is difficult to move an AF point to the movement of the target subject.

Thus, it is considered that the system to automatically move an AF area to the movement of a target subject in the AF area using a tracking device for obtaining an image signal (video signal) of the subject image from a camera and automatically detecting (tracking) the movement (position) of a target on the screen according to the video signal is effective. In this system, the operator only has to specify a target subject to be put into focus. After the specification, the AF area automatically moves to the movement of the target subject on the screen. Therefore, the target can be continuously put into focus without a complicated operation.

However, in this system, there arises the following problem when an image signal of a subject image used for recording or regenerating is used as an image signal for tracking in the tracking device.

For example, an image signal (video signal) of a subject image obtained by a TV camera (especially a TV camera for HDTV) for a broadcast is commonly a high quality (high resolution) image signal, but an image signal for tracking does not require very high image quality. If an image signal of a TV camera is fetched to a tracking device as an image signal for tracking, each processing circuit of the tracking device is to process an image signal of high image quality or a signal is to be down-converted to appropriate quality as an image signal for tracking. Therefore, a high performance circuit is used for each processing circuit of a tracking device, or a down-converting circuit is to be added, thereby causing a high cost required of the device. In addition to the problem of cost, higher electric power is required in processing an image signal of high image quality than in processing an image signal of low image quality, and there is also the problem that high electric power is required in down-converting process on an image signal of high image quality.

When a target subject moving at a high speed is to be tracked, it is preferable the number of frames of a subject image to be captured in a unit time by an image pickup element, that is, the frame rate, is enhanced. However, since the frame rate when a subject image for recording or regenerating is to be captured by an image pickup element is prescribed, the frame rate cannot be changed optimally for obtaining an appropriate image signal for tracking. Similarly, although an exposure adjustment is to be made such that the appropriate brightness (signal level) can be obtained for an image signal of a subject image for tracking, the exposure adjustment cannot be made to obtain an appropriate image signal for tracking because it is necessary to make the exposure adjustment to obtain appropriate brightness as an image signal of a subject image for recording or regenerating.

Furthermore, it is considered that the technology of pattern matching used in checking a product, etc. is to be used as a method for automatically allowing an AF point to track a desired target subject. For example, an image of a target subject to be tracked is stored as a reference pattern, and an image matching the reference pattern is detected from among the shot images sequentially shot by a camera. Then, by moving the position of the AF point to the position of the image matching the reference pattern, the AF point can track a desired target subject.

However, although a target subject is the same, an image can be largely changed when the target subject moves, and there is the possibility that the image cannot match the image of the reference pattern initially stored. Additionally, although a target subject itself does not move, there is also the possibility that an image does not match a reference pattern when the size of an image of a target subject is changed by a zoom, etc. In this case, there arises a problem that the target subject can not be tracked.

The present invention has been developed to solve the above-mentioned problems, and aims at providing an autofocus system capable of allowing an AF area (AF frame) to track a target subject without fail by changing a frame rate and adjusting exposure as necessary to obtain an image signal of appropriate image quality as an image signal of a subject image for tracking to detect the movement of a target subject on the screen, and obtain an appropriate image signal for tracking. The present invention further aims a providing an autofocus system capable of continuously putting a predetermined target subject into focus without processing by an operator by appropriately allowing an AF area (AF point) to track a predetermined target subject moving on the screen although its image changes.

To attain the above-mentioned objectives, the autofocus system according to the first aspect of the present invention controls focus of a taking lens on a subject as a target of autofocus in a range of an AF area in a shooting range of a camera, and automatically puts the subject into focus, characterized by comprising: a target subject specifying device which specifies a target subject to be put into focus; a tracking image pickup device which captures a subject image in the shooting range of the camera, and is provided in addition to an image pickup device of the camera which captures a subject image to be recorded or regenerated; a target subject movement detection device which detects a movement in the shooting range of the target subject specified by the target subject specifying device according to an image signal of a subject image captured by the tracking image pickup device; and an AF area change device which changes the range of the AF area such that the movement of the target subject detected by the target subject movement detection device is tracked. According to the present invention, a tracking image pickup device separate from an image pickup device of a camera for capturing a subject image for recording or regenerating captures a subject image for tracking, thereby obtaining an image signal of appropriate image quality as an image signal for tracking.

The autofocus system according to the second aspect of the present invention is based on the first aspect of the present invention, wherein the tracking image pickup device comprises a frame rate change device which changes the number of frames of subject images captured in a unit time. According to the present invention, an image signal of a subject image can be obtained at a frame rate appropriate for tracking, thereby allowing an AF area to track a target subject without fail.

The autofocus system according to the third aspect of the present invention is based on the second aspect of the present invention, wherein the frame rate change device changes the number of frames of subject images captured in a unit time by the tracking image pickup device based on the speed of the movement of the target subject detected by the target subject movement detection device. According to the present invention, the optimum frame rate can be automatically obtained by changing the frame rate at a moving speed of a target subject.

The autofocus system according to the fourth aspect of the present invention is based on the first aspect of the present invention, further comprising an exposure adjustment device which changes brightness of the subject image captured by the tracking image pickup device. According to the present invention, an image signal of a subject image can be obtained at the brightness appropriate for tracking, thereby allowing an AF area to track a target subject without fail.

The autofocus system according to the fifth aspect of the present invention controls focus of a taking lens on a subject as a target of autofocus in a range of an AF area in a shooting range of a camera, and automatically puts the subject into focus, comprising: an image pickup device which sequentially obtains an image of a subject in the shooting range; a target subject specifying device which specifies a target subject to be put into focus by the autofocus; a storage device which obtains an image of the target subject specified by the target subject specifying device as a reference image from the image pickup device and stores the image; a target subject detection device which sequentially detects an image of the target subject from among images sequentially obtained by the image pickup device by detecting an image matching the reference image from among the images obtained by the image pickup device; an AF area change device which changes the position of the AF area to track the target subject based on the position of an image of the target subject detected by the target subject detection device in the shooting range; and an update device which updates a reference image stored by the storage device by an image of the target subject detected by the target subject detection device.

The autofocus system according to the sixth aspect of the present invention is based on the fifth aspect of the present invention, wherein the target subject detection device detects an image matching the reference image from among images in a range obtained by limiting a range of an image obtained by the image pickup device to a part of a range including a range of an image of the target subject detected before.

The autofocus system according to the seventh aspect of the present invention is based on the fifth aspect of the present invention, wherein the target subject detection device detects an image of the target subject by obtaining a difference between two images sequentially obtained by the image pickup device when an image matching the reference image cannot be detected.

According to the autofocus system of the present invention, an image signal of appropriate image quality can be obtained as an image signal for tracking for detection of the movement of a target subject on the screen. Furthermore, a change of a frame rate or an exposure adjustment can be made as necessary to obtain an image signal appropriate for tracking, and an AF area (AF frame) can be allowed to track a target subject without fail.

Additionally, although an image is changed relative to a desired target subject moving on the screen, the AF area (AF point) can track the target subject without fail, and a desired target can be continuously put into focus without a complicated operation of an operator in the AF.

### BRIEF DESCRIPTION OF THE DRAWINGS

Fig. 1 is a block diagram showing the entire configuration of the image pickup system to which the autofocus system according to the present invention is applied;
Fig. 2 shows the AF frame;
Fig. 3 is a flowchart showing the procedure of a tracking process in the pattern matching system;
Fig. 4 is a flowchart showing the procedure of a tracking process in the inter-frame difference extraction system; and
Fig. 5 is a block diagram showing the entire configuration of the image pickup system to which the autofocus system according to the present invention is applied; and
Fig. 6 is a flowchart showing the procedure of a tracking process by a tracking device.

### DETAILED DESCRIPTION OF THE PREFERRED EMBODIMENTS

The autofocus system according to preferred embodiments of the present invention is described below in detail by referring to the attached drawings.

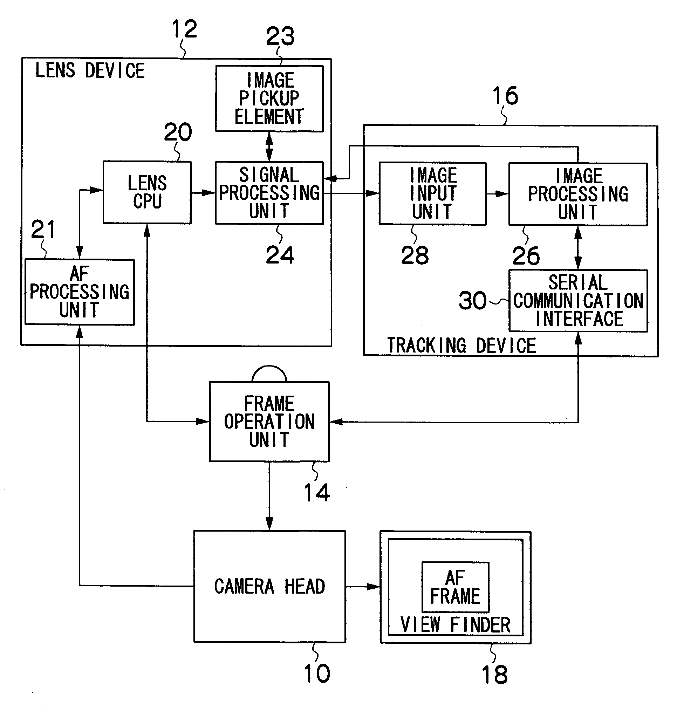

Fig. 1 is a block diagram showing the entire configuration of the image pickup system to which the autofocus system according to the present invention is applied. The image pickup system shown in Fig. 1 is, for example, an image pickup system used in shooting an image using a TV camera for a broadcast. Fig. 1 shows a camera head 10 whose lens can be switched, a lens device 12 having a taking lens (optical system) attached to the lens mount of the camera head 10, a frame operation unit 14, a tracking device 16, etc.

The camera head 10 is loaded with an image pickup element (for example, a CCD) not shown in the attached drawings, a predetermined signal processing circuit, etc., and the light from a subject entering the taking lens of the lens device 12 is formed on the image pickup surface of the image pickup element of the camera head 10 by the taking lens. The image pickup element of the camera head 10 is an image pickup element for obtaining video (video signal) for recording or regenerating. In the present specifications, it is referred to as a video image pickup element. An image (subject image) formed on the image pickup surface of a video image pickup element is opto-electrically converted, and then treated in a predetermined signal processing by a signal processing circuit of the camera head 10. Thus, a video signal of a predetermined format is generated, and is output from the video signal output terminal, etc. of the camera head 10 to external equipment. Furthermore, the camera head 10 is provided with a view finder (monitor) 18 for checking of the structure, etc. A video signal from the camera head 10 is provided for the view finder 18, and video in real time which is shot by the camera head 10 is displayed on the screen of the view finder 18. On the screen of the view finder 18, the information about the AF frame, etc. indicating the range of the AF area which is the target of the autofocus (AF) is also displayed.

The lens device 12 is provided with a taking lens (optical system) not shown in the attached drawings, and the taking lens is attached to the lens mount of the camera head 10. The light from a subject entering the taking lens is formed on the image pickup surface of the video image pickup element of the camera head 10 after passing through various lenses arranged at the taking lens. In addition to the fixed lens group, a movable focus lens group, a zoom lens group, a diaphragm, etc. are arranged in the taking lens. They are electrically driven by a motor (servomechanism) not shown in the attached drawings. For example, a focus lens group and a zoom lens group move in the optical axis direction, the movement of the focus lens group makes an adjustment to a focus (lens-to-subject distance), and the movement of the zoom lens group makes an adjustment to a focal length (zoom power). In the system about autofocus according to, for example, the present embodiment, etc., at least a focus lens group has to be electrically driven, and other movable component can be manually driven. If a predetermined movable component is electrically driven by the operation of an operator, it is controlled according to the control signal output in the operation by an operator from the operation unit (an operation unit, etc. of a controller connected to the lens device 12) not shown in the attached drawings, but the details are omitted here.

As shown in Fig. 1, the lens device 12 is provided with a lens CPU 20, an AF processing unit 21, a signal processing unit 24, an image pickup element 23, etc. The lens CPU 20 integrally controls the entire lens device 12, controls the motor to control the focus lens group, etc. of the taking lens, and also controls the start and the stop of the operation of each processing unit of the lens device 12.

The AF processing unit 21 obtains a video signal obtained by the video image pickup element of the camera head 10 from the camera head 10, and calculates the focus evaluation value indicating the level of the contrast of a subject image according to the video signal. For example, after a signal of a high frequency component of a video signal obtained from the camera head 10 is extracted using a high pass filter, a signal in a range corresponding to an AF area to be a target of the AF in the signal of the high frequency component is accumulated for each screen (each frame or each field). Thus, the accumulation value obtained for each screen indicates the level of the contrast of a subject image, and provided for the lens CPU 20 as a focus evaluation value.

The lens CPU 20 obtains the information (AF frame information) about an AF frame indicating the range (contour) of an AF area as described later in detail from the frame operation unit 14, and specifies the range of the AF frame specified by the AF frame information in the AF processing unit 21 as an AF area. Then, the focus evaluation value obtained from the image (video signal) in the AF area is obtained from the AF processing unit 21. Thus, each time video signals of one screen are obtained from the camera head 10 (each time a focus evaluation value is obtained by the AF processing unit 21), the focus of a taking lens (focus lens group) is controlled such that a focus evaluation value can be acquired from the AF processing unit 21 and simultaneously the acquired focus evaluation value can be the largest (maximum), that is, the contrast of the subject image of the AF area can be the highest. For example, the mountain-climbing method is generally known as a control method for a focus lens group based on the focus evaluation value. That is, a focus lens group is moved in the direction of increasing a focus evaluation value, and when a point at which the focus evaluation value starts decreasing is detected, a focus lens group is set at the position. Thus, a subject in the AF frame can be automatically put into focus.

The image pickup element 23 is arranged in the lens device 12 so that the movement on the screen can be automatically detected (tracked) on the screen of the target (target subject) of the AF. In the present specifications, the image pickup element 23 is referred to as a tracking image pickup element. It is not necessary that the tracking image pickup element 23 is an element of high image quality (high resolution). However, an element lower in image quality (low resolution) than the video image pickup element of the camera head 10 can be used. For example, not a CCD image sensor, but a CMOS image sensor can be used. On the optical path of a taking lens, for example, an optical division device such as a half mirror, etc. is arranged. The optical division device divides the light from a subject entering the taking lens into two portions. One of the divided portions of the light from a subject is led to the image pickup surface of the video image pickup element of the camera head 10, and the other is led to the image pickup surface of the tracking image pickup element 23. The shooting range (range of a subject on which an image is formed in the image pickup area) and the lens-to-subject distance (distance from the lens to the subject at which the subject is put into focus) in the image pickup area of the tracking image pickup element 23 are configured to match the shooting range and the lens-to-subject distance for the image pickup area of the video image pickup element of the camera head 10. A subject image fetched by the tracking image pickup element 23 matches the subject image fetched by the video image pickup element of the camera head 10. It is not always necessary that the matching result relating to the shooting range is "completely matching". For example, it is possible that the shooting range of the tracking image pickup element 23 can be larger than the shooting range of the video image pickup element of the camera head 10.

The signal processing unit 24 controls the tracking image pickup element 23 to sequentially obtain an image signal of a subject image captured by the tracking image pickup element 23, and outputs the signal as a video signal in a predetermined format to the tracking device 16 described later. The signal processing unit 24 controls the charge accumulation time (electronic shutter time) of the tracking image pickup element 23 at an instruction from the tracking device 16, makes an exposure adjustment, and switches the shooting speed (the number of frames of subject images captured in a unit time, that is, the frame rate).

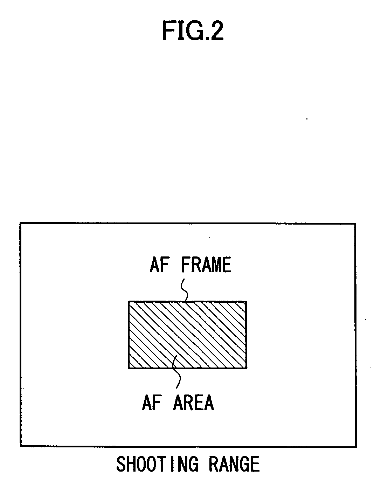

The frame operation unit 14 is provided with an operation member for an operator specifying the setting contents of an AF frame of the position, shape, size, etc. of the above-mentioned AF frame. The AF frame indicates the contour of the AF area of the target range of the AF to the shooting range (screen range of a subject image shot by a video image pickup element) of the video image pickup element of the camera head 10 as shown in Fig. 2. The frame operation unit 14 sets and changes the setting contents of the position, etc. of the AF frame based on an operation when an operator operates the operation member. In the present embodiment, it is assumed that the shape of the AF frame is a rectangle. The change of the setting contents such as the position, size, etc. of the AF frame by the operation member of the frame operation unit 14 is made by adding a change to the setting contents by the amount of the change corresponding to the amount of the subsequent operation of the operation member based on the setting contents of the AF frame before the operation. For example, the position of the AF frame vertically and horizontally changes in a direction and by an amount of movement respectively corresponding to the rotation direction and the amount of rotation of the track ball. Assuming that the point determining the position (for example, according to the present embodiment, the central position of the AF frame of the rectangle) in the shooting range (screen) of the AF frame is defined as an AF point, the position of the AF frame is determined by setting the position of the AF point.

Meanwhile, if a change in setting contents of the AF frame is not indicated by an operator without an operation of an operation member, the setting contents of the AF frame are set and changed according to the AF frame information provided by the tracking device 16 described later. The frame operation unit 14 transmits the AF frame information indicating the setting contents of the AF frame which has been set and changed according to the operation by an operator or the AF frame information from the tracking device 16 at a request from the lens CPU 20. Thus, the target range of the AF is set in the range of the AF frame set and changed by the frame operation unit 14.

The tracking device 16 moves the AF point to the movement of the target while tracking the target specified by an operator on the screen, and automatically changes the position of the AF frame. When the changing operation of the AF frame is not performed by an operator, the AF frame is automatically changed. When the changing operation of the AF frame is performed by an operator, the operation is prioritized over the tracking device 16, and the AF frame is changed by the operation of the operator.

The frame operation unit 14 transmits the AF frame information about the setting contents of the AF frame set and changed as described above to the camera head 10, and displays the AF frame at the corresponding position on the screen of the view finder 18. Thus, the operator can recognize the position, shape, size, etc. of the AF frame at the time while the operator is watching the view finder 18.

The tracking device 16 comprises an image processing unit 26, an image input unit 28, a serial communication interface 30, etc. The image input unit 28 obtains a video signal (brightness signal) captured by the tracking image pickup element 23 and generated by the signal processing unit 24 in the lens device 12, and provides the image processing unit 26 with the image (image data) in the range specified by the image processing unit 26 in the shooting range.

The image processing unit 26 tracks on the screen the target specified by an operator by the pattern matching system described later, or the inter-frame difference extraction system based on the image data obtained from the image input unit 28, and moves the AF point by tracking the movement of the target. Then, it transmits the AF frame information about the position of the AF point to the frame operation unit 14 through the serial communication interface 30, and specifies the AF point when the AF frame is automatically changed. The frame operation unit 14 and the image processing unit 26 also communicate with each other information other than the AF frame information through the serial communication interface 30.

Additionally, the image processing unit 26 specifies the charge accumulation time (electronic shutter time) of the tracking image pickup element 23 in the signal processing unit 24 of the lens device 12 such that the brightness (signal level) of the image data obtained from the image input unit 28 is optimum. Thus, the electronic shutter time of the tracking image pickup element 23 is set as the time specified by the image processing unit 26. For example, the brighter the subject is, the shorter the electronic shutter time is set, and the darker the subject is, the longer the electronic shutter time is set such that the average brightness of the image data obtained from the image input unit 28 can be predetermined.

Furthermore, the image processing unit 26 specifies in the signal processing unit 24 the optimum frame rate corresponding to the moving speed of a target on the screen. Thus, the shooting speed of the tracking image pickup element 23 is set at the speed specified by the image processing unit 26. For example, when the moving speed of a target on the screen is lower than a predetermined threshold, the frame rate is set at a standard value, for example, 30 fps (frame/sec). If the moving speed of a target reaches or exceeds the threshold, the frame rate is set at, for example, a value obtained by doubling the standard value, that is, 60 fps. Although not limited to the case in which the frame rate is changed, the maximum value of the frame rate which can be set is restricted within the range of the performance of the tracking device 16, etc., and is restricted within the range of the possible electric shutter time required by the tracking image pickup element 23. The higher the frame rate is, the larger the power consumption disadvantageously becomes. Therefore, it is desired that the frame rate is not excessively high. It is preferable that the frame rate can be changed depending on the moving speed of a target. Furthermore, when the resolution of the image signal effectively obtained by the tracking image pickup element 23 is lowered, the maximum value of the frame rate can be raised or the process load can be reduced. Therefore, the resolution of the tracking image pickup element 23 can be changed as necessary.

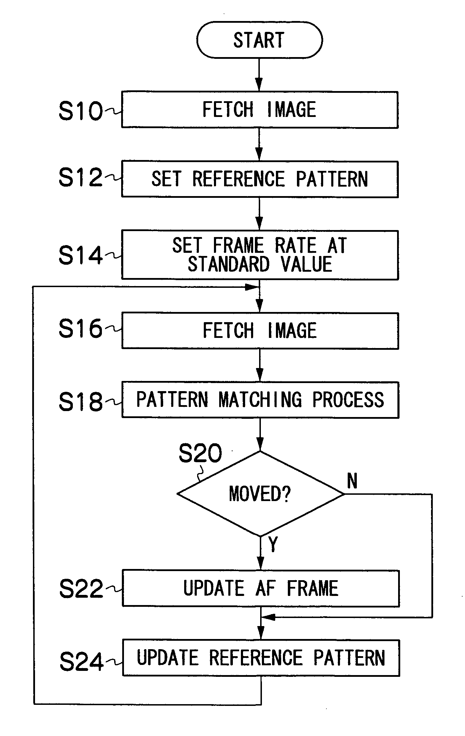

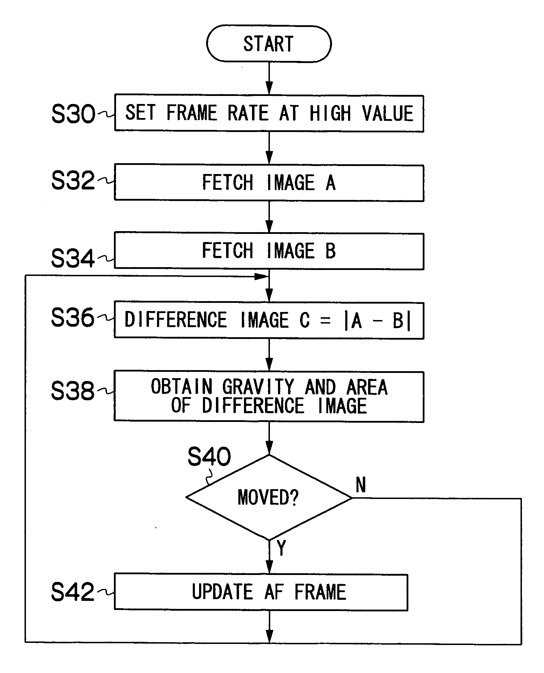

The procedure by the image processing unit 26 is described below by referring to Figs. 3 and 4. In the image processing unit 26, the tracking process by the pattern matching system and the tracking process by the inter-frame difference extracting system are performed. The pattern matching system is performed by detecting an image which is the closest to the image of a reference pattern set or registered in advance from among the images fetched from the image input unit 28, and an image of an object specified by an operator as an image of a reference pattern is set in advance.

The inter-frame difference extracting system is a process of obtaining the difference (difference image) between an image of the latest frame (one screen) obtained from the image input unit 28 and an image of one frame obtained before a predetermined frame, and detecting the movement of a target specified by an operator on the screen based on the difference image.

Although the pattern matching system is higher in precision, it requires a longer time than the inter-frame difference extracting system. Therefore, there is the case in which the pattern matching system cannot be effective when the moving speed of a target on the screen is high. Therefore, when the moving speed of a target on the screen is high, the inter-frame difference extracting system is used. In other cases, the pattern matching system is used.

First, the tracking process by the pattern matching system is explained below by referring to the flowchart shown in Fig. 3. An operator operates the operation member of the frame operation unit 14 while watching the video displayed on the screen of the view finder 18 and the AF frame, stores the target to be tracked in the AF frame, and puts the target into focus by the AF. Then, he/she presses a predetermined determination button of the frame operation unit 14. Thus, the frame operation unit 14 issues an instruction to set a reference pattern to the image processing unit 26, and the image processing unit 26 reads the AF frame information indicating the setting contents of the AF frame from the frame operation unit 14 through the serial communication interface 30, and fetches the image data in the range of the AF frame from the image input unit 28 (step S10). Then, the image is set and registered (stored) as a reference pattern (step S12). Before the frame operation unit 14 issues an instruction to set a reference pattern, the image processing unit 26 fetches image data in the range of the AF frame, and indicates at this time the electronic shutter time to the signal processing unit 24 of the lens device 12 so that the brightness (signal level) of the image data can be the optimum, thereby making an exposure adjustment.

In setting the reference pattern, the size of the reference pattern is not the size of the AF frame, but can be automatically set depending on the type of target. For example, when the type of target can be selected by a predetermined switch of the frame operation unit 14, and a person is selected as a target, a reference pattern of an appropriate size can be set depending on the type of target if an average size of a human face is automatically set as the size of the reference pattern. However, since the image size of a target on the screen depends on the lens-to-subject distance (focus position) and the zoom power (focal length), it is necessary to obtain the information about the focus position and the focal length from the lens CPU 20 and change the size of the reference pattern depending on the focus position and the focal length. The size of the AF frame can be automatically changed depending on the type of target regardless of the size of the reference pattern.

Then, the image processing unit 26 issues to the signal processing unit 24 of the lens device 12 an instruction to set the frame rate at a standard value (for example, 30 fps) (step S 14), and sets the shooting speed of the tracking image pickup element 23 at a standard speed. Then, the processes in steps S16 to S24 are repeatedly performed. First, the image data in the range a little larger than the reference pattern is fetched from the image input unit 28 with the currently set AF frame defined as the center in the vertical and horizontal direction (step S16). Then, the image closest to the reference pattern is detected from among the fetched images in the well-known pattern matching system, and the position of the target on the screen set as a reference pattern is detected (step S 18). If the brightness of the image data fetched from the image input unit 28 is not appropriate and a reference pattern cannot be detected, the electronic shutter time is indicated to the signal processing unit 24 of the lens device 12 such that the brightness of the image data can be the optimum, an exposure adjustment is made, and the processes in steps S16 and S 18 are performed again.

The image processing unit 26 determines whether or not the target has been moved on the screen based on the detected position of the target (step S20). If it is determined YES, the AF point is displaced in the same direction as the movement direction of the target by the same amount, and the AF frame information indicating the AF point is transmitted to the frame operation unit 14. Thus, the setting contents of the AF frame, that is, the position of the AF frame is updated (step S22). If it is determined NO in step S20, the process in step S22 is not performed.

Then, the image processing unit 26 updates the image of the reference pattern to the image detected in the pattern matching system (step S24), and control is returned to step S16.

By updating the AF frame as described above, the position of the AF frame is moved by following the movement of the target specified by the operator as a reference pattern, and the target specified by the operator can be continuously put into focus.

Then, the tracking process by the inter-frame difference extracting system is explained below by referring to the flowchart shown in Fig. 4. When the target specified by setting the reference pattern in the pattern matching system moves at a high speed on the screen, the detection of the target (reference pattern) is delayed in the pattern matching system, and there is the possibility that the AF point is considerably displaced from a target. If the image processing unit 26 determines that the moving speed of the target on the screen during the tracking process by the pattern matching system exceeds a predetermined threshold, the tracking process is switched to the inter-frame difference extracting system, and the following process is performed. The switch between the pattern matching system and the inter-frame difference extracting system can be performed based on an instruction (switching operation, etc.) of an operator.

When the image processing unit 26 starts the process in the inter-frame difference extracting system, it issues to the signal processing unit 24 of the lens device 12 an instruction to set a frame rate at a high value (for example, 60 fps) (step S30), and sets the shooting speed of the tracking image pickup element 23 at a high speed. Thus, a subject image can be shot at a shooting speed corresponding to a quickly moving target. Then, the processes in steps S32 to S42 are repeatedly performed. First, the image data of one frame (one screen) is fetched from the image input unit 28 (step S32). The image is defined as an image A. If the brightness of the fetched image data is not appropriate, the electronic shutter time is indicated to the signal processing unit 24 of the lens device 12 so that the brightness of the image data can be appropriate and an exposure adjustment is made, thereby fetching the image data.

Then, after the passage of a predetermined time from the fetch of the image A, for example, the image of one frame from the frame after the frame of the image A is fetched from the image input unit 28 (step S34). This image is defined as an image B.

The range of the image data fetched as the images A and B is limited to a predetermined range in the image data in the entire shooting range obtained from the shooting area of the tracking image pickup element 23. When data is first fetched, image data in a range a little larger than the reference pattern with the AF point defined as the center is fetched. In the second and subsequent fetches, image data in a range a little larger than the range (including the pixel in which the pixel value is 1) in which the difference image described later is detected is fetched. Thus, a moving object other than a specified target can be ignored, and the image processing time can be shortened.

When the images A and B are fetched, the image processing unit 26 obtains the absolute value of the difference in pixel value between the pixels of the images A and B, and also obtains the image data of the difference image C of the images A and B (step S36). Then, the image data of the difference image C is binarized, and the gravity and the area of the pixel having the pixel value of 1 are obtained (step S38). Then, it is determined whether or not a target has moved depending on whether or not the area is larger than a predetermined threshold value and the gravity has been displaced relative to the gravity detected before (step S40). If it is described YES, the AF point is displaced in the same direction as the movement direction by the amount of the prior movement of the gravity, and the AF frame information about the AF point is transmitted to the frame operation unit 14. Thus, the setting contents of the AF frame, that is, the position of the AF frame, are updated (step S42). When the process in step S42 is over, control is returned to step S32. If it is determined NO in step S40, the process in step S42 is not performed, and control is returned to step S32.

As described above, if the moving speed of a target (moving speed of the gravity) becomes lower than a predetermined speed (for example, the same value as the threshold used when the pattern matching system is switched into the inter-frame difference extracting system) while the tracking process is being performed in the inter-frame difference extracting system, the system is switched into the tracking process in the pattern matching system.

In the above-mentioned embodiment, during the high-speed zooming operation or when a target to be tracked is moving at a high speed, there is the possibility that the target cannot be detected in the tracking process in the pattern matching system. Therefore, in this case, the process can be switched automatically or manually to the tracking process in the inter-frame difference extracting system. For example, it is determined whether or not a high-speed zooming operation is being performed depending on whether or not the changing speed of a zoom power (focal length) has exceeded a predetermined value, and it is determined whether or not the target has moved at a high speed depending on whether or not the changing speed of the focus position (shooting distance) has exceeded a predetermined value. Thus, the pattern matching system and the inter-frame difference extracting system can be automatically switched.

In the above-mentioned embodiment, only one reference pattern (target) is registered or set, but a plurality of reference patterns (targets) can be registered or set so that an actually used reference pattern can be selected by a switch, etc. Thus, for example, a plurality of persons in a discussion program, etc. can be simultaneously of alternately shot with a target person put into focus by the AF.

Furthermore, in the above-mentioned embodiment, the system of the tracking process can be switched between the pattern matching system and the inter-frame difference extracting system simultaneously with the switch of the shooting speed (frame rate) of the tracking image pickup element 23 regardless of the switch of the system of the tracking process.

In the above-mentioned embodiment, the system of the tracking process is switched between the pattern matching system and the inter-frame difference extracting system depending on the moving speed of a target on the screen, but it is not always necessary to switch between the two systems, that is, the tracking process can be performed in only one of the systems.

In the above-mentioned embodiment, the shooting speed (frame rate) of the tracking image pickup element 23 is switched between the two levels, that is, a standard speed and a high speed, but more than two levels can be used in switching the process depending on the moving speed of the target on the screen. Furthermore, the frame rate is not automatically switched, but an operator can manually switch the speed to a desired value. For example, when an operator specifies a desired frame rate value using a predetermined operation member of the frame operation unit 14, the value can be provided from the frame operation unit 14 to the signal processing unit 24, and the frame rate can be set at the value.

In the above-mentioned embodiment, the lens device 12, the frame operation unit 14, and the tracking device 16 are shown as individual devices, but two or all devices can be incorporated into one unit. Furthermore, in the above-mentioned embodiment, the operation member (for example, a determination switch, etc. for determination of a target) relating to the process performed by the tracking device 16 is provided in the frame operation unit 14, but it can be provided in the tracking device 16.

In the above-mentioned embodiment, a video signal for the AF obtained by the AF processing unit 21 is obtained from the video image pickup element of the camera head 10. However, as with the tracking image pickup element 23, the light from a subject entering the taking lens can be divided by an optical division device and formed on the image pickup surface of the AF image pickup element provided for the AF so that the AF video signal can be obtained from the AF image pickup element. Additionally, the tracking image pickup element 23 can also be used as an AF image pickup element so that an AF video signal can be obtained from the tracking image pickup element 23.

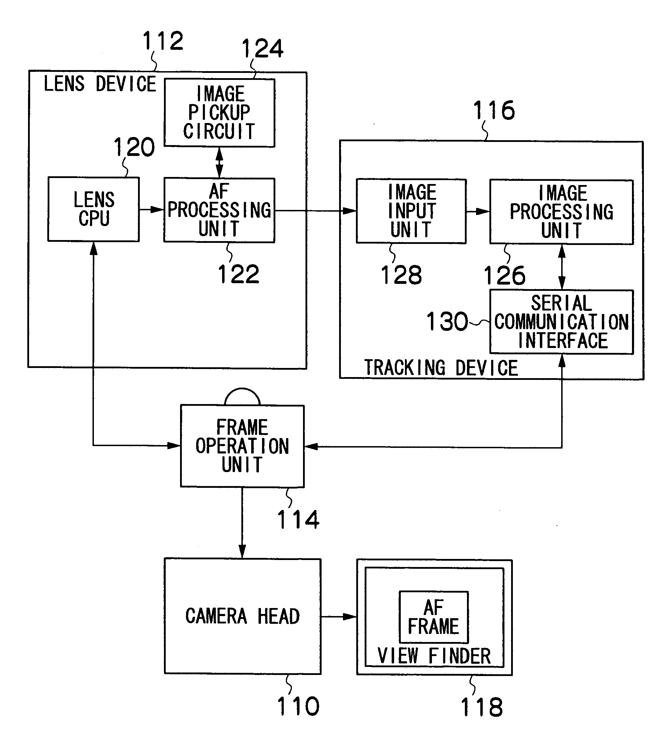

Described below are other embodiments of the autofocus system according to the present invention. Fig. 5 is a block diagram showing the entire configuration of an image pickup system to which the autofocus system according to the other embodiments of the present invention is applied. The image pickup system shown in Fig. 5 can be an image pickup system to be used in shooting an image using, for example, a broadcast TV camera. Fig. 5 shows a lens switchable camera head 110, a lens device 112 having a taking lens (optical system) attached to the lens mount of the camera head 110, a frame operation unit 114, a tracking device 116, etc.

The camera head 110 is loaded with an image pickup element (for example, a CCD), a required signal processing circuit, etc. An image formed by the taking lens of the lens device 112 is opto-electrically converted by an image pickup element, and is then treated in predetermined signal processing. A video signal in a predetermined format generated by a signal processing circuit is output from a video signal output terminal, etc. of the camera head 110 to external equipment. The camera head 110 is provided with a view finder (monitor) 118 for checking a configuration. For the view finder 118, the video signal from the camera head 110 is provided, and a real time image (video) being shot by the camera head 110 is displayed on the screen of the view finder 118. On the screen of the view finder 118, the information about the AF frame, etc. indicating the range of the AF area to be a target of autofocus (AF) is displayed.

The lens device 112 is provided with a taking lens (optical system) not shown in the attached drawings but attached to the lens mount of the camera head 110, and the taking lens forms an image of a subject on the image pickup surface of the image pickup element of the camera head 110. The taking lens is configured by a movable units for adjusting the shooting conditions such as a focus lens group, a zoom lens group, a diaphragm, etc. These movable units are electrically driven by motor (servo mechanism) not shown in the attached drawings. For example, the focus lens group and the zoom lens group move in the optical axis direction. A focus (lens-to-subject distance) is adjusted by moving the focus lens group and a focal length (zoom power) is adjusted by moving the zoom lens group. In the system relating to autofocus as with the present embodiment, at least a focus lens group is to be electrically driven, and the other movable units can be driven manually only. When a predetermined movable unit is electrically driven by an operation of an operator, the operations of the movable units are controlled according to the control signal output in the operation of the operator from the operation unit (such as the operation unit of the controller connected to the lens device 112, etc.), and the details are omitted here.

As shown in Fig. 5, the lens device 112 is loaded with a lens CPU 120 which integrally controls the entire lens device 112, an AF processing unit 122 which performs an autofocus (AF) process, an AF image pickup circuit 124, etc. The AF image pickup circuit 124 is arranged in the lens device 112 to obtain a video signal for AF processing, and is provided with a processing circuit, etc. which outputs an image pickup element (CCD, etc.) and an output signal of an image pickup element as video signals of a predetermined format. The image pickup element of the AF image pickup circuit 124 is referred to as an AF image pickup element. The video signal output from the AF image pickup circuit 124 is a brightness signal.

On the image pickup surface of the AF image pickup element, light from a subject is formed after branched from the light from a subject entering the image pickup element of the camera head 110 using a half mirror, etc. arranged on the optical path of a taking lens. The shooting range and the lens-to-subject distance (distance of a subject put into focus) in the shooting area of the AF image pickup element is configured such that they can match the shooting range and the lens-to-subject distance for the shooting area of the image pickup element of the camera head 110, and a subject image fetched by the AF image pickup element matches the subject image fetched by the image pickup element of the camera head 110. It is not always necessary that both shooting ranges completely match each other. For example, the shooting range of the AF image pickup element can be large enough to include the shooting range of the image pickup element of the camera head 110. A video signal from the camera head 110 can be provided for the AF processing unit 122 without the AF image pickup element.

The AF processing unit 122 obtains a video signal from the AF image pickup circuit 124, and calculates a focus evaluation value indicating the level of the contrast of the subject image according to the video signal. For example, after extracting a signal of a high frequency component of a video signal obtained from the AF image pickup element by a high pass filter, a signal in the range corresponding to the AF area which is a target of the AF in the signals of the high frequency component is accumulated for each screen. Thus, the accumulation value obtained for each screen indicates the level of the contrast of a subject image, and is provided as a focus evaluation value for the lens CPU 120. The range of the AF area is specified by the lens CPU 120 as described later.

The lens CPU 120 obtains the information (AF frame information) about the AF frame indicating the range (contour) of the AF frame as described later in detail, and specifies to the AF processing unit 122 the range in the AF frame specified according to the AF frame information as an AF area. Then, it obtains from the AF processing unit 122 the focus evaluation value obtained by the image (video signal) in the AF area, and controls a focus lens group such that the obtained focus evaluation value can be largest (maximum), that is, the contract of the subject image of the AF area can be the highest. For example, a mountain climbing system is commonly known as a control system of a focus lens group based on the focus evaluation value. The focus lens group is moved in the direction of increasing the focus evaluation value. When a point at which the focus evaluation value starts decreasing is detected, the focus lens group is set at the position. Thus, the subject in the AF frame can be automatically put into focus.

The frame operation unit 114 is provided with an operation member for an operator specifying the setting contents of the AF frame such as the position, shape, size, etc. of the AF frame. The AF frame indicates the contour of the AF area which is the target range of the AF for the shooting range or the screen of a shot image of the image pickup element of the camera head 110. When an operator operates the operation member, the frame operation unit 114 sets and changes the setting contents of the position, etc. of the AF frame based on the operation. In the present embodiment, it is assumed that the shape of the AF frame is limited to a rectangle. The change of the setting contents such as the position, size, etc. of the AF frame by an operation member of the frame operation unit 114 is made by adding a change to the setting contents by an amount of the change corresponding to the amount of the subsequent operation of the operation member based on the setting contents of the AF frame before the operation. For example, the position of the AF frame is displaced in the vertical and horizontal directions in a direction and by the amount of the movement respectively corresponding to the rotation direction and the amount of rotation of the track ball. Furthermore, assuming that the AF point is the point for determination of the position (central position of a rectangular AF frame in the present embodiment) of the AF frame in the shooting range (screen of a shot image), the position of the AF frame is determined by setting the position of the AF point.

On the other hand, when the operation member of the frame operation unit 114 is not operated, and the change of the setting contents of the AF frame is not indicated by an operator, the setting contents of the AF frame are set and changed according to the AF frame information provided from the tracking device 116 described later. The frame operation unit 114 transmits the AF frame information about the setting contents of the AF frame set and changed according to the operation of an operator or the AF frame information from the tracking device 116 to the lens CPU 120 at a request of the lens CPU 120. Thus, the target range of the AF can be set in the range of the AF frame set and changed by the frame operation unit 114.

The tracking device 116 moves the AF point to the movement of a target while tracking on the screen the target (target subject) specified by the operator, and automatically changes the position of the AF frame. When an operator is not changing the AF frame, the AF frame is automatically changed. When an operator is changing the AF frame, the operation is prioritized over the tracking device 116, and the AF frame can be changed by the operation of the operator.

The frame operation unit 114 also transmits to the camera head 110 the AF frame information about the setting contents of the AF frame set and changed as described above, and displays the AF frame in the corresponding position on the screen of the view finder 118. Thus, the operator can recognize the position, shape, size, etc. of the AF frame while watching the view finder 118.

The tracking device 116 is provided with an image processing unit 126, an image input unit 128, a serial communication interface 130, etc. The image input unit 128 obtains a video signal (brightness signal) obtained from the AF image pickup circuit 124 through the AF processing unit 122, and provides the image processing unit 126 with the image data of the shot image obtained from the video signal at a request from the 126.

The image processing unit 126 tracks on the screen the target specified by an operator based on the image data obtained from the image input unit 128 in the pattern matching system or the inter-frame difference extracting system, and moves the AF point by following the movement of the target. Then, the AF frame information indicating the position of the AF point is transmitted to the frame operation unit 114 through the serial communication interface 130, and the AF point used when the AF frame is automatically changed is specified. The frame operation unit 114 and the image processing unit 126 communicate with each other information other than the AF frame information through the serial communication interface 130.

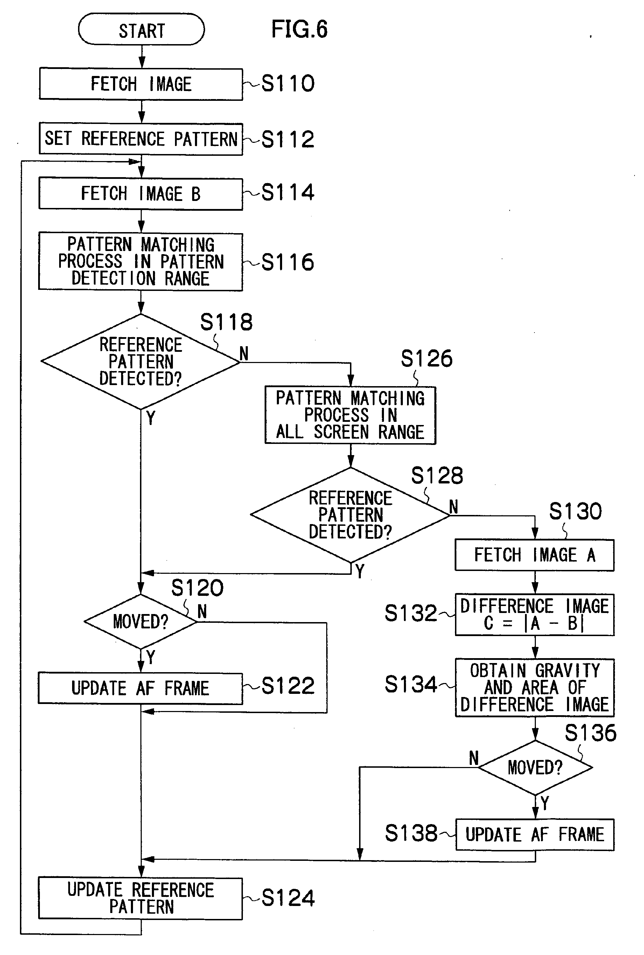

The tracking process performed by the image processing unit 126 in the tracking device 116 is described below by referring to the flowchart shown in Fig. 6. First, the operator operates the operation member of the frame operation unit 114 while watching the video displayed and the AF frame displayed on the screen of the view finder 118, and stores a part or all of the target to be tracked (put into focus). Thus, the target is put into focus in the process of the AF by the lens CPU 120. Then, the operator presses the determination button of the frame operation unit 114. Thus, the frame operation unit 114 issues an instruction to set a reference pattern to the image processing unit 126. The image processing unit 126 reads the AF frame information indicating the setting contents of the AF frame at the time from the frame operation unit 114 through the serial communication interface 130, and fetches from the image input unit 128 the image (image data) in the range of the AF frame obtained according to the AF frame information in the video signals (images of one screen in the entire shooting range) provided for the image input unit 128 from the AF processing unit 122 of the lens device 112 (step S110). Then, the image is set and registered (stored) as a reference pattern (step S 112). If the video signal provided for the image input unit 128 from the AF processing unit 122 is a video signal in the interlace system in which one screen (screen of one frame) is configured by the screen of two fields, an image (image data) fetched as one screen from the image input unit 128 can be an image (image data) obtained by a video signal of one field, or an image obtained by the video signal of two fields.

In setting the reference pattern, the size of the reference pattern is not the size of the AF frame, and can be automatically set depending on the type of target. For example, the type of target can be selected by a predetermined switch of the frame operation unit 114 so that, when a person is selected as a target, the size of an average face of a person can be automatically set as the size of a reference pattern, and the appropriate size of a reference pattern depending on the type of target can be set.

Then, the image processing unit 126 repeatedly performs the processes in steps S 114 to S 138 as follows. First, an image (image data) of one screen is newly fetched from the image input unit 128 (step S 114). The image obtained in step S 114 is defined as an image B. In a predetermined pattern detection range set in the screen range of the image B, the position of the image matching the image of the reference pattern is detected in the well-known pattern matching process (step S116). The pattern detection range is assumed to be a little larger than a reference pattern with the currently set AF frame defined as the center in the vertical and horizontal directions. Thus, the time and the process load required for the pattern matching process can be reduced.

Then, the image processing unit 126 determines whether or not a reference pattern has been detected in the pattern detection range in step S 116 (step S 118). That is, it is determined whether or not there is an image matching the image of a reference pattern in the pattern detection range.

If it is determined YES, then it is determined whether or not the target has moved on the screen relative to the position of the previous detection based on the position of image of the detected reference pattern, that is, the position of the target on the screen set as a reference pattern (step S120). If it is determined YES, the AF point is displaced in the same direction as the moving direction by the amount of movement of the target, and the AF frame information indicating the AF point is transmitted to the frame operation unit 114. Thus, the setting contents of the AF frame, that is, the position of the AF frame is updated (step S122), and the AF frame is moved to the position of the target. If it is determined NO in step S120, the process in step S 120 is not performed. An AF point (position of the AF frame) can be set based on the position of the image of a reference pattern detected without the determination in step S120.

Then, the image processing unit 126 updates the image of the reference pattern based on the image detected from the image B as matching an image of the reference pattern in the pattern matching process in step S 116 (step S124). That is, in step S 116, an image detected from the image B as matching the image of the reference pattern in step S116 is set and registered as a new reference pattern. Thus, although a target image to be tracked changes, there is a small change from the target image stored as the reference pattern. Therefore, it is easy to detect an image of a target in the pattern matching process. When the process in step S124 is completed, control is returned to step S 114.

If it is determined NO in step S 118, that is, if an image of the reference pattern is not detected in the pattern detection range, the image processing unit 126 detects the position of the image matching the image of the reference pattern using the entire screen range of the image B as a target in the pattern matching process (step S126). Then, it is determined whether or not the image of the reference pattern bas been detected in step S126 (step S 128). If it is determined YES, control is passed to the above-mentioned step S120, and the processes in steps S120 to S124 are performed as in the case it is determined YES in step S 118.

If it is determined NO in step S128, that is, when a target image cannot be detected in the pattern matching process because the target image quickly changes after updating the image of the reference pattern in step S124, etc., the target is tracked by the inter-frame difference extracting system in steps S 130 to S140. First, the image processing unit 126 fetches image data of one screen from the image input unit 128 (step S 130). The image is defined as an image A. Then, the absolute value of the difference between the pixel values of the pixels corresponding to the image A fetched in step S 130 and the image B fetched in step S 114 is obtained. Also, the image data of the difference image C of the images A and B is obtained (step S132). Then, the image data of the difference image C is binarized, and the gravity and the area of the pixel having the pixel value of 1 are obtained (step S 134). Then, it is determined whether or not a target has moved depending on whether or not the area is larger than a predetermined threshold value and the gravity has been displaced relative to the gravity detected before (step S 136). If it is described YES, the AF point is displaced in the same direction as the movement direction by the amount of the prior movement of the gravity, and the AF frame information about the AF point is transmitted to the frame operation unit 114. Thus, the setting contents of the AF frame, that is, the position of the AF frame, is updated (step S 138). When the process is over, control is passed to step S124, and the image of the reference pattern is updated. That is, although the tracking process is performed in the inter-frame difference extracting system, the position of the target can be detected. Therefore, based on the detected position, the target image is extracted, for example, from the image A, and the image is set and registered as a reference pattern.

When the process in step S124 is completed, control is returned to the process starting in step S 114, and the process in step S 116 is performed. It is preferable that the pattern detection range at this time is, for example, a little larger than the range of the smallest rectangle including the pixel whose pixel value is 1 when the image data of the difference image C between the images A and B is binarized in step S 132.

In the above-mentioned tracking process, since the image of the reference pattern is periodically updated in the process in step S124, the position of the target can be detected in the pattern matching process although the image of a target is changed by the movement of the target, or a change (zoom power, shooting position, etc.) of the shooting condition of a camera, thereby allowing the target to track the AF frame without fail.

In the above-mentioned embodiment, it is not necessary that the frequency of the frame (field) of a video signal obtained by the AF image pickup circuit 124 (AF image pickup element) of the lens device 112 has to match the frame frequency of the video signal obtained from the image pickup element of the camera head 110, but the frame frequency of the video signal in the AF image pickup circuit 124 is enhanced to improve the adaptability to a target moving at a high speed or a target whose image quickly changes.

In the above-mentioned embodiment, only one reference pattern (target) is registered and set. However, a plurality of reference pattern (targets) can be registered and set, and an actually available reference pattern can be selected by a switch from among a plurality of set reference patterns. Thus, for example, it is effective when a person to be put into focus is switched to another in a discussion program, etc. in the case in which a plurality of persons are to be simultaneously or alternately shot in the AF.

Furthermore, in the present embodiment, the lens device 112, the frame operation unit 114, and the tracking device 116 are individual devices, but all or two of them can be incorporated into one unit. In the above-mentioned embodiment, the operation member (for example, a determination switch for determining a target, etc.) relating to the process of the tracking device 116 is also provided in the frame operation unit 114, but can be provided in the tracking device 116.

In the above-mentioned embodiment, a video signal for the AF is obtained by an image pickup element exclusive for the AF independent of the image pickup element of the camera head 110, but a video signal obtained by the image pickup element of the camera head 110 for the AF can be used. However, as in the embodiment above, when the video signal for the AF is obtained from the image pickup element exclusive for the AF, and when the camera head 110 is available for a high-precision (HD) TV system, the HD signal is not required to perform AF, thereby realizing a small and power-saving device.

## Claims

1. An autofocus system which controls focus of a taking lens on a subject as a target of autofocus in a range of an AF area in a shooting range of a camera, and automatically puts the subject into focus, **characterized by** comprising:
a target subject specifying device (26) which specifies a target subject to be put into focus;
a tracking image pickup device (23, 24) which captures a subject image in the shooting range of the camera, and is provided in addition to an image pickup device of the camera which captures a subject image to be recorded or regenerated;
a target subject movement detection device (26) which detects a movement in the shooting range of the target subject specified by the target subject specifying device (26) according to an image signal of a subject image captured by the tracking image pickup device (23, 24); and
an AF area change device (16) which changes a range of the AF area such that the movement of the target subject detected by the target subject movement detection device (26) is tracked.

2. The autofocus system according to claim 1, wherein
the tracking image pickup device (23, 24) comprises a frame rate change device (24) which changes a number of frames of subject images captured in a unit time.

3. The autofocus system according to claim 2, wherein
the frame rate change device (24) changes a number of frames of subject images captured in a unit time by the tracking image pickup device (23, 24) based on the speed of the movement of the target subject detected by the target subject movement detection device (26).

4. The autofocus system according to claim 1, further comprising
an exposure adjustment device (26) which changes brightness of the subject image captured by the tracking image pickup device (23, 24).

5. An autofocus system which controls focus of a taking lens on a subject as a target of autofocus in a range of an AF area in a shooting range of a camera, and automatically puts the subject into focus, **characterized by** comprising:
an image pickup device (124) which sequentially obtains an image of a subject in the shooting range;
a target subject specifying device (126) which specifies a target subject to be put into focus by the autofocus;
a storage device (126) which obtains an image of the target subject specified by the target subject specifying device (126) as a reference image from the image pickup device (124) and stores the image;
a target subject detection device (126) which sequentially detects an image of the target subject from among images sequentially obtained by the image pickup device (124) by detecting an image matching the reference image from among the images obtained by the image pickup device (124);
an AF area change device (116) which changes a position of the AF area to track the target subject based on a position of an image of the target subject detected by the target subject detection device (126) in the shooting range; and
an update device (126) which updates a reference image stored by the storage device (126) by an image of the target subject detected by the target subject detection device (126).

6. The autofocus system according to claim 5, wherein
the target subject detection device (126) detects an image matching the reference image from among images in a range obtained by limiting a range of an image obtained by the image pickup device (124) to a part of a range including a range of an image of the target subject detected before.

7. The autofocus system according to claim 5, wherein
the target subject detection device (126) detects an image of the target subject by obtaining a difference between two images sequentially obtained by the image pickup device (124) when an image matching the reference image cannot be detected.
